# NEUE EUROPÄISCHE PATENTSCHRIFT

(11) **EP 0 584 143 B2**
(45) Veröffentlichungstag und Bekanntmachung des Hinweises auf die Entscheidung über den Einspruch: **16.04.2003**
(45) Hinweis auf die Patenterteilung: 17.01.1996
(21) Anmeldenummer: 92909860.6
(22) Anmeldetag: 07.05.1992
(51) Int. Cl.: B29C 45/00, B29C 45/14, G06K 19/06, H01L 21/56

(54) **VERFAHREN UND VORRICHTUNG ZUM HERSTELLEN VON KUNSTSTOFF-FORMSTÜCKEN MIT BEREICHSWEISE REDUZIERTER WANDSTÄRKE**
PROCESS AND DEVICE FOR MANUFACTURING PLASTIC MOULDINGS HAVING WALL REGIONS OF REDUCED THICKNESS
PROCEDE ET DISPOSITIF DE FABRICATION DE PIECES MOULEES EN MATIERE PLASTIQUE AYANT DES REGIONS DE PAROI A EPAISSEUR REDUITE

(30) Priorität: 10.05.1991 DE 4115208; 20.12.1991 DE 4142392
(43) Veröffentlichungstag der Anmeldung: 02.03.1994
(73) Patentinhaber: GAO Gesellschaft für Automation und Organisation mbH, 81307 München (DE)
(72) Erfinder: BARAK, Renee-Lucia, D-8025 Unterhaching (DE); HAGHIRI-TEHRANI, Yahya, D-8000 München 40 (DE); BAADER, Helmut, D-8470 Nabburg (DE)
(74) Vertreter: Klunker . Schmitt-Nilson . Hirsch
(86) Internationale Anmeldenummer: EP9200991
(87) Internationale Veröffentlichungsnummer: WO92020506

(56) Entgegenhaltungen:
- EP-A- 0 246 973
- EP-A- 0 267 826
- EP-A- 0 340 100
- DE-A- 1 729 368
- DE-A- 3 401 644
- DE-A- 3 401 644
- DE-C- 3 131 216
- FR-A- 2 520 541
- FR-B- 2 579 799
- GB-A- 2 081 974
- GB-A- 2 217 646
- US-A- 3 030 666
- US-A- 4 489 033
- US-A- 4 980 115
- Kunststoffe 80 (1990), 5, Seiten 583-587
- Kunststoffe 74 (1984), 2, Seiten 79-83

## Beschreibung

Die Erfindung betrifft ein Verfahren und eine Vorrichtung zum Herstellen von Chipkarten und Chipkarten-Rohlingen mit bereichsweise reduzierter Wandstärke durch Einspritzen eines schmelzflüssigen Kunststoffmaterials in einen Formraum und anschließendem Abkühlen des Kunststoffmaterials.

Chipkarten mit einem Kartenkörper aus Kunststoffmaterial sind seit langem bekannt. So ist beispielsweise aus der FR-A 2 579 799 eine Chipkarte mit einem Kartenkörper aus PVC bekannt, der eine mehrstufige Vertiefung für das Chipmodul enthält. Das Modul wird unter Wärmeeinwirkung in die mit Noppen versehene Aussparung eingepreßt. Während des Einpressens dienen die Noppen, die bei diesem Vorgang erweichen und auf ein vorbestimmtes Maß zusammengedrückt werden, als Abstandselemente, so daß nachträglich ein Flüssigkleber mit definierter Klebeschicht zwischen dem Modul und der Karte aufgebracht werden kann. Bei entsprechender Dosierung kann auf diese Weise ein Austreten des Klebers auf die Kartenoberfläche vermieden werden. Es ist der FR-A 2 579 799 nicht im einzelnen zu entnehmen, wie der Kartenkörper selbst hergestellt wird.

Aus der EP 0 277 854 A1 und aus der EP 0 267 826 A1 sind indes spritzgußtechnische Herstellungsverfahren für Chipkarten bzw. Chipkartenrohlinge, die einen Membranbereich bzw. eine Vertiefung zur Aufnahme des Chipmoduls aufweisen, bekannt.

Bei dem in der EP 0 277 854 A1 vorgestellten Verfahren zur Herstellung der Karte befindet sich das Modul während des Einspritzvorganges bereits in der Gußform und wird dort durch Saugluft gehalten. Durch eine im Hohlraum der Gußform befindliche federnd gelagerte Platte, die das Modul gegen die obere Gußform preßt, wird eine zusätzliche Positionierung und Fixierung des Moduls vor dem Spritzgießen sichergestellt. Der Kunststoff wird über eine Seitenkante der Form eingespritzt, wobei sich die Platte aufgrund des hierbei entstehenden Drucks auf Kartendicke absenkt.

Das Verfahren ermöglicht es, eine Chipkarte in einem Arbeitsgang herzustellen. Da sich das Modul während des Einspritzvorgangs im Formraum befindet, wirkt es jedoch wie ein in die Gußform ragender Stempel. Aufgrund der seitlichen Einspritzung des Materials teilt sich der Kunststoffstrom vor dem Modul bzw. vor einem Stempel in zwei Ströme auf, diedas Hindernis umfließen und sich hinter diesem wieder vereinigen. Dabei entstehen hinter dem im Formraum befindlichen Hindernis bevorzugte Molekularorientierung in Fließrichtung, die sich im Extremfall als Sollbruchstellen auswirken. Darüber hinaus erlaubt die durch den seitlichen Einspritzkanal festgelegte Strömungsrichtung nicht die Ausbildung komplexer, scharfer Konturen im Bereich der Membran, wie sie beispielsweise zur Bildung von Verankerungselementen für das Modul notwendig sind. Schließlich kann es bei seitlicher Einspritzung im Membranbereich durch Lufteinschlüsse zu Blasenbildung kommen.

In der EP 0 267 826 A1 wird ein Verfahren zur Herstellung von Chipkarten-Rohlingen in Spritzgußtechnik vorgestellt. Die verwendete Gußform ist aus planparallelen Platten gebildet, die gegeneinander beweglich sind. In einer der Platten ist der Einspritzkanal vorgesehen. Gegenüber diesem ist in der anderen Platte ein in die Gußform ragender und mit Kühlkanälen versehener Stempel angeordnet, durch den die Aussparung zur späteren Aufnahme für das Chipmodul in der Karte geformt wird. Der Stempel hat auf seiner Stirnfläche Vertiefungen zur Erzeugung von Noppen im Boden der Modulaussparung. Wird das Chipmodul in die Aussparung eingebracht, liegt es auf den Noppen auf, so daß der Spalt zwischen dem Chipmodul und dem Boden mit einem Kleber zur Befestigung des Moduls aufgefüllt werden kann.

Das in der EP 0 267 826 A1 vorgestellte Verfahren behebt aufgrund der Lage des Einspritzkanals die Nachteile des in der EP 0 277 254 A1 genannten Verfahrens. Insbesondere entstehen keine Vorzugsbruchstellen und können im Bereich der Stirnfläche des Stempels komplexe, scharfe Konturen (Noppen) ausgebildet werden. Wegen der Lage des Einspritzkanals liegt der zwangsläufig entstehende Einspritznippel jedoch im Bereich der Membran auf der Rückseite des Karten-Rohlings, was das optische Erscheinungsbild der fertiggestellten Karte beeinträchtigt. Gravierender ist aber, daß das Kunststoffmaterial zunächst in den Bereich mit reduzierter Wandstärke eingespritzt wird, um dann unter beträchtlichem Druckverlust in die übrigen Bereiche zu fließen. Aufgrund dessen besteht die Gefahr der unvollständigen Füllung der peripheren Bereiche des Formraums mit Kunststoffmaterial.

Zusammenfassend läßt sich sagen, daß beide Verfahren eine kostengünstige Herstellung von Chipkarten bzw. Chipkarten-Rohlingen erlauben, die jedoch mit Qualitätseinbußen verbunden sind.

Der Erfindung liegt demgegenüber die Aufgabe zugrunde, ein Verfahren und eine Vorrichtung der eingangs erwähnten Gattung zu schaffen, die eine wirtschaftliche Fertigung von Chipkarten und Chipkarten-Rohlingen mit in Teilbereichen erheblich reduzierter Wandstärke ohne die geschilderten Einschränkungen ermöglichen.

Erfindungsgemäß wird diese Aufgabe durch die Merkmale der nebengeordneten Ansprüche gelöst.

Aus der DE-A 34 01 644 ist zwar ganz allgemein das Herstellen von Spritzgußteilen, bei denen Aussparungen durch das Einfahren eines beweglichen Stempels erzielt werden, bekannt. Die DE-A 34 01 644 geht an keiner Stelle auf die spezifischen Verfahrensschritte ein, die zur Herstellung einer Chipkarte notwendig sind.

Gemäß der Erfindung werden die beweglichen Elemente der Spritzgußform nicht nur zur Herstellung der dünnen Wandbereiche, sondern auch zur Einbettung des Chipmoduls in die Kunststoffmasse des Kartenkörpers benützt. Wie anhand der Ausführungsbeispiele noch weiter erläutert wird, kann dies auf verschiedene Weise geschehen. Um die Vielfalt der Möglichkeiten zu veranschaulichen, werden hierzu zwei Ausführungsvarianten beschrieben.

Bei einer dieser Ausführungsformen wird mit einem beweglichen Stempel ein an der Stirnseite des Stempels fixiertes Mikrochipmodul, wie es für Chipkarten üblicherweise Anwendung findet, in die Kunststoffmasse gepreßt. Auf diese Weise wird in einem einzigen Arbeitsgang sowohl das Modul in den Kartenkörper eingebracht und fixiert als auch der dafür benötigte Hohlraum geschaffen.

Bei der zweiten Ausführungsform wird das Einbetten des Moduls in zwei Schritte unterteilt, wobei in einem ersten Schritt durch Einpressen des Stempels der Hohlraum geschaffen wird, in einem zweiten, direkt anschließenden Schritt wird das Modul in diesen Hohlraum eingesetzt. Die Fixierung im Hohlraum erfolgt mit Hilfe einer am Modul vorgesehenen Heißkleberbeschichtung, die von der Restwärme des Spritzgußkartenkörpers aktiviert wird.

Das erfindungsgemäße Verfahren weist gegenüber den bekannten Möglichkeiten eine Vielzahl von Vorteilen auf. So kann beispielsweise die Stirnfläche der beweglichen Stempel nahezu beliebig kompliziert strukturiert sein. Durch Einpressen des Stempels in die Kunststoffmasse erhält man stets einen exakten Abdruck dieser Strukturen. Die Bildung von Blasen, Fehlstellen, unscharfer Konturen etc. wird vollständig vermieden.

Da der Stempel erst nach dem Einfließen der Kunststoffmasse in diese eingepreßt wird, ist die Molekülorientierung über das ganze Volumen der Karte einheitlich, d. h. auf unterschiedliche Molekülorientierung zurückzuführende Vorzugsbruchlinien entstehen nicht. Üblicherweise ist mit derartigen Vorzugsbruchlinien zu rechnen, wenn die Kunststoffmasse während des Einspritzens in die Form eingesetzte Formelemente umströmt bzw. an den Stellen, an denen die verschiedenen Kunststoffströme nach Umfließen des "Hindernisses" aufeinandertreffen.

Da die dünnen Wandbereiche durch Pressen der bereits eingeströmten Kunststoffmasse erzeugt wird, erhält man nicht nur die exakte Form- und Wandstärke auch sehr dünner Membranen, in diesen Bereichen wird auch durch Komprimieren der Kunststoffmasse eine erhöhte Festigkeit des derart verdichteten Kunststoffmaterials erreicht. Gerade dies ist bei Chipkarten von besonderem Interesse, da die Karten in den anschließenden Druckvorgängen (Aufbringen des Druckbildes) sowie im späteren Kartengebrauch besonderen Belastungen ausgesetzt sind.

Weitere Vorteile und Ausführungsvarianten sind den nachfolgenden Beispielen zu entnehmen, die anhand der Figur beschrieben sind.

Es zeigen:
- Fig. 1: die Schnittzeichnung einer rotationssymmetrischen Membrane mit unterschiedlichen Wandstärkenbereichen,
- Fig. 2: eine Spritzgußform in fragmentarischer geschnittener Ansicht in Stellungen zum Zeitpunkt des Formfüllvorganges und der Wandstärkenreduzierung,
- Fig. 3: einen Chipkartenrohling in Aufsicht,
- Fig. 4: den Schnitt A-B aus Fig. 3,
- Fig. 5: den Schnitt A-B mit eingesetztem Chipmodul,
- Fig. 6: eine Vorrichtung zum Herstellen von Spritzgußkarten in vereinfachter Schnittdarstellung,
- Fig. 7: alternative Vorrichtungselemente zum Herstellen von Spritzgußkarten,
- Fig. 8a - e: alternative Chipmodule zum vorteilhaften Einbau in Spritzgußkarten,
- Fig. 9: eine Normkarte mit integrierter Minichipkarte in Aufsicht,
- Fig. 10: eine Vorrichtung zum Herstellen von Normkarten mit integrierter Minichipkarte in vereinfachter Schnittdarstellung.

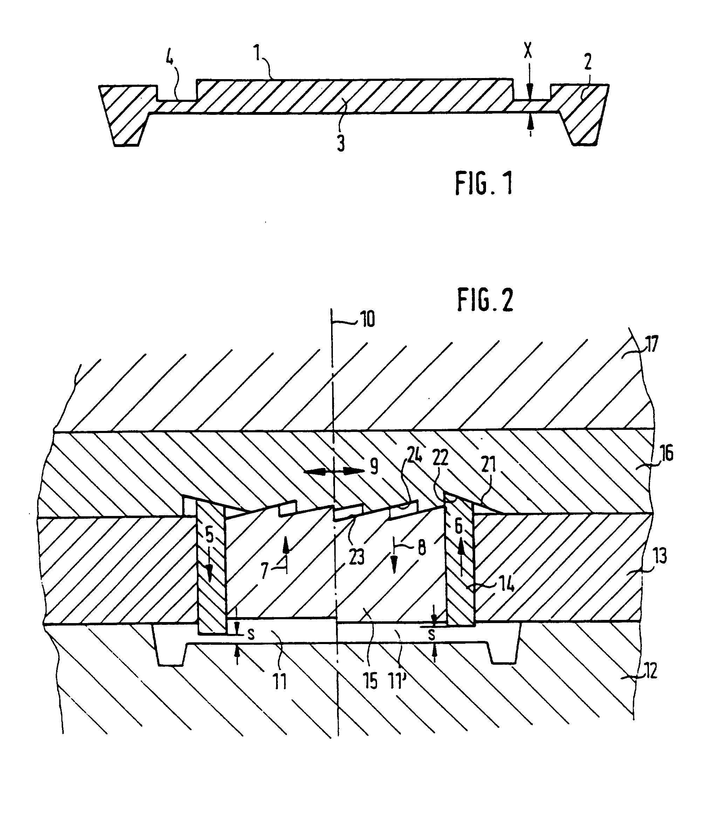

Fig. 1 zeigt die Schnittdarstellung eines Formstücks 1 aus Kunststoff mit unterschiedlichen Wandstärken. Das Formstück 1 ist rotationssymmetrisch aufgebaut. Es weist einen äußeren Ring 2 auf, der verstärkt ausgeführt und derart profiliert ist, daß er bei der späteren Anwendung in einer ringförmigen Gehäusenut befestigt werden kann. Im Inneren des Formstücks 1 ist ein kreisförmigen Boden bzw. eine Membran 3 mit erhöhter Wandstärke vorgesehen. Zwischen dem äußeren Ring 2 und der Membran 3 ist eine ringförmige Wandstärkenreduzierung 4 vorgesehen, die eine elastische Einbettung der Membrane 3 bewirkt.

Fig. 2 zeigt eine schematisch dargestellte Spritzgußform, mit der das in Fig. 1 skizzierte Formteil 1 hergestellt werden kann.

Die dargestellte Spritzgießform umfaßt in an sich bekannter Weise ein erstes Formteil bzw. eine Formplatte 12 und ein zweites Formteil bzw. eine Formplatte 13, die mit Hilfe nicht dargestellter Vorrichtungselemente zum Öffnen der Form längs der Mittellinie 10 verschoben werden können. In der dargestellten geschlossenen Position definieren die Formteile 12, 13 zwischen sich einen Formraum 11 bzw. 11'. Obschon der Formraum 11, 11' bei der dargestellten Ausführungsform rotationssymmetrisch zur Mittellinie 10 angeordnet ist, ist die Erfindung auf eine derartige Lage des Formraumes natürlich nicht beschränkt. Es können auch andere nicht symmetrische Anordnungen vorgesehen werden.

In einem der Formteile 12, 13, bei der vorliegenden Ausführungsform im Formteil 13, ist eine Anordnung, bestehend aus einem äußeren Kernelement 14 und einem inneren Stempelelement 15, vorgesehen. Die Elemente 14, 15 können relativ zueinander und zum Formteil 13 bewegt werden und besitzen freie Stirnflächen, die den Formraum 11 bereichsweise begrenzen bzw. definieren.

Wie bereits erwähnt, dient bei der vorliegenden Ausführungsform die Spritzgießform zum Herstellen eines scheibenförmigen Formteiles mit einer ringförmigen Querschnittverdünnung nahe seinem äußeren Umfang. Das äußere Kernelement 14 kann demzufolge eine zylinderförmige Konfiguration mit einer Achse haben, die mit der Mittellinie 10 des Formraumes 11 zusammenfällt.

Das äußere Kernelement 14 ist, wie durch die Pfeile 5, 6 angedeutet, zwischen einer ersten und zweiten Stellung relativ zum gegenüberliegenden Formteil 12 bewegbar, die jeweils durch nicht gezeigte geeignete Mittel anschlagbegrenzt sind. Bei der Ausgangsstellung (in der Zeichnung rechts) ist der Abstand "S" zwischen der freien Stirnfläche des Kernelements 14 und einem gegenüberliegenden Wandbereich des Formraumes 11 relativ groß, da das Kernelement 14 im Formteil 13 im wesentlichen versenkt ist. Im Bereich des Kernelementes 14 liegt somit keine Querschnittsverengung vor, die das Material am Einfließen von einer nicht gezeigten zentralen Angießstelle zu den äußeren Begrenzungen des Formraumes 11 hindern könnten. Der Formraum 11 hat in dieser Stellung des Kernelementes 14 eine Konfiguration, die im wesentlichen derjenigen des zu fertigenden Formstückes ohne Wandstärkenreduktion entspricht und wird deshalb nachfolgend auch Ausgangsformraum 11' bezeichnet.

In der zweiten, in der Zeichnung auf der linken Seite gezeigten, Stellung wurde das Kernelement 14 in den Formraum 11 verschoben, wodurch der Abstand zwischen seiner freien Stirnfläche und dem gegenüberliegenden Wandbereich des Formraumes 11 auf ein Maß "s" herabgesetzt. Dieses Maß "s" entspricht der gewünschten reduzierten Wandstärke am zu fertigenden Formstück.

Obschon andere geeignete Einrichtungen vorgesehen werden können, dient bei der vorliegenden Ausführungsform zur Steuerung der Bewegung des Kernelements 14 zwischen der ersten und zweiten Stellung eine Anordnung aus zusammenwirkenden ersten Keilflächen 21, 22 an der dem Formraum 11 abgewandten Stirnseite des Kernelementes 14 bzw. an einem zwischen dem Formteil 13 und einer Stützplatte 17 verschiebbar angeordneten Steuerelement 16. Die Keilflächen 21, 22 bewirken, daß die translatorische hin-und hergehende Bewegung des Steuerelementes 16 (vgl. Pfeil 9) in eine Bewegung des Kernelementes 14 in Richtung der Pfeile 5 bzw. 6 umgesetzt wird. Es versteht sich, daß zu diesem Zweck auch andere geeignete Einrichtungen, z. B. eine Solenoid- oder hydraulische Kolben/Zylindereinrichtung, vorgesehen werden können.

Die Bewegung des Steuerelementes 16 in Richtung des Pfeiles 9 kann durch irgendeine geeignete Betätigungseinrichtung (nicht gezeigt), z. B. Kolbenzylindereinrichtung, in Abhängigkeit des Befehls einer, ebenfalls nicht gezeigten, Steuereinrichtung erfolgen.

Die Anordnung der zusammenwirkenden ersten Keilflächen 21, 22 ist so, daß bei einer Bewegung des Steuerelementes 16 in eine Richtung (in der Zeichnung nach rechts) das Kernelement 14 die erste oder Ausgangsposition einnimmt, während bei einer Bewegung des Steuerelementes 16 in die entgegengesetzte Richtung das Kernelement 14 in die zweite, in der Zeichnung linksseitige, Position gebracht wird.

Ein zweites Paar zusammenwirkende Keilflächen 23, 24 ist am inneren Stempelelement 15 bzw. Steuerelement 16 vorgesehen. Die zweiten Keilflächen 23, 24 sind in Bezug auf die ersten Keilflächen 21, 22 entgegengesetzt orientiert, so daß die Bewegung des Steuerelementes 16 in eine Richtung eine Bewegung des Stempelelementes 15 in eine Richtung auslöst, die entgegengesetzt zu der des Kernelementes 14 ist. Bei einer Verschiebung des Steuerelementes 16, in der Zeichnung nach links, erfährt daher das Stempelelement 5 eine Bewegung in Richtung des Pfeiles 7 weg vom gegenüberliegenden Formteil 12, so daß sich der Abstand zwischen der freien Stirnfläche des Stempelelementes 15 und dem gegenüberliegenden Wandbereich des Formraumes 11 etwas vergrößert, während gleichzeitig der Abstand zwischen der freien Stirnfläche des Kernelementes 14 dem gegenüberliegenden Wandbereich des Formraumes 11 verringert wird.

Durch geeignete Abstimmung der Neigung der ersten und zweiten Keilflächen 21, 22 bzw. 23, 24 kann erreicht werden, daß die durch die Bewegung des Stempelelementes 15 erzielte Vergrößerung des Volumens des Formraumes 11 im wesentlichen der Abnahme des Volumens infolge der Bewegung des Kernelementes 14 in die zweite Stellung entspricht. Auf diese Weise kann erreicht werden, daß das Gesamtvolumen des Formraumes 11 sowohl in der ersten als auch zweiten Stellung des Kernelementes 14 im wesentlichen verändert ist. Es versteht sich jedoch, daß die Erfindung nicht auf einen im wesentlichen vollständigen Volumenausgleich beschränkt ist. Vielmehr können, wenn erwünscht, die von den Elementen 14, 15 verdrängten bzw. geschaffenen Teilvolumina voneinander abweichen, wodurch sich besondere Wirkungen am zu fertigenden Formstück, z. B. eine Materialverdichtung, erzielen lassen.

Die Funktionsweise der vorbeschriebenen Vorrichtung ist wie folgt. Über das in der Zeichnung nicht gezeigte zentrale Angießsystem wird schmeizflüssiges Kunststoffmaterial in den Ausgangsformraum 11' eingespritzt, wobei sich das Kernelement 14 und Stempelelement 15 in den in der Zeichnung rechten Positionen befinden, so daß das Material ohne wesentliche Behinderung durch den großen Spalt "S" zu den äußeren Bereichen des Ausgangsformraumes 11' fließen kann und damit dessen problemlose vollständige Füllung gewährleistet ist. Unmittelbar nach Beendigung des Füllvorganges wird von der Steuereinrichtung ein Befehl an die Betätigungseinrichtung des Steuerelementes 16 geliefert, aufgrund dessen das Steuerelement 16 in eine Richtung in der Zeichnung nach links längs des Pfeiles 9 bewegt wird. Die Bewegung des Steuerelementes 16 hat zur Folge, daß das Kernelement 14 in Richtung des Pfeiles 5 in die zweite, in der Zeichnung linksseitige, Position gebracht wird und dabei das zwischen seiner Stirnfläche und der gegenüberliegenden Wand des Formraumes 11 befindliche Material verdrängt wird. Gleichzeitig bewirkt die Verschiebung des Steuerelementes 16 eine Bewegung des inneren Stempelelementes 15 in eine Richtung längs des Pfeiles 7 weg vom gegenüberliegenden Formteil 12, wodurch sich der Abstand zwischen seiner freien Stirnfläche und der gegenüberliegenden Wand des Formraumes 11 etwas vergrößert, um das durch das Kernelement 14 verdrängte Volumen aufzunehmen.

Die auf der linken Seite der Zeichnung gezeigte Stellung der Teile wird solange beibehalten, bis das Material im Formraum 11 abgekühlt und das erhaltene Formstück nach Öffnen der Form durch geeignete mechanische oder pneumatische Einrichtungen aus dem Formraum ausgeworfen worden ist. Im Wirkbereich des äußeren Kernelementes 14 verbleibt danach im Formstück eine dem Spalt "s" entsprechende Wandstärke, die, wenn erwünscht, um ein Vielfaches kleiner als die Wandstärke an benachbarten Bereichen des Formstückes sein kann. Versuche haben gezeigt, daß das erfindungsgemäße Verfahren ohne weiteres eine Reduzierung von einer Ausgangswandstärke von z. B. 0,8 mm auf 0,15 mm oder weniger ermöglicht, ohne daß Bindenähte oder Lufteinschlüsse an den gefertigten Formstücken auftraten. Da der Formfüllvorgang durch keine Querschnittsverengung des Formraumes eingeschränkt ist, lassen sich mit dem Verfahren praktisch sämtliche thermoplastische Kunststoffmaterialien verarbeiten. Die diesbezüglichen, bei herkömmlichen Verfahren zum Spritzen dünner Wandstärken bestehenden Einschränkungen entfallen.

Es versteht sich, daß die gezeigte Anzahl der Kern- und Stempelelemente 14, 15 und deren Anordnung untereinander und in Bezug auf den Formraum 11 nicht beschränkt sind, sondern eine beliebige Anordnung eines oder mehrerer wandstärkenreduzierender Kernelemente 14 mit ein oder mehreren Stempelelementen 15 vorgesehen werden kann. Anstelle eines Stempelelementes 15 kann zur Volumenänderung auch vorgesehen sein, daß das durch das Kernelement 14 verdrängte Materialvolumen durch die noch plastische Seele des im Formraum anstehenden Materials zurück in das Angießsystem geführt wird. Andere, eine Volumenänderung bewerkstelligende, Einrichtungen, z. B. eine membranartige Nachgiebigkeit eines Wandbereiches des Formraumes, können ebenfalls vorgesehen sein.

Bei der gezeigten Ausführungsform erfolgt die Bewegung der Elemente 14, 15 im wesentlichen parallel zueinander zu der Mittellinie 10. Die Erfindung ist auf eine derartige Bewegungsrichtung nicht beschränkt. Vielmehr können die Bewegungen der einzelnen Elemente zwischen ihren jeweiligen Endstellungen dem jeweiligen Anwendungsfalls angepaßt und unterschiedlich ausgerichtet sein.

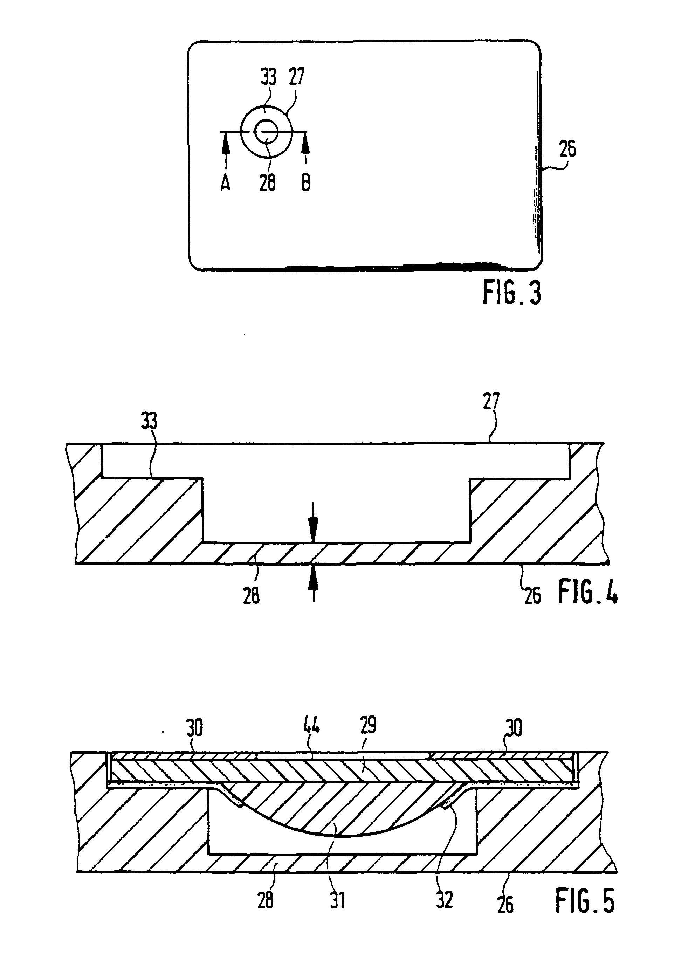

Fig.3 zeigt einen Chipkartenrohling 26, der mit Hilfe des Verfahrens in besonders vorteilhafter Weise hergestellt werden kann. Der Kartenrohling 26 weist eine Vertiefung 27 mit den Stufen 28 und 33 auf, in die zu einem späteren Zeitpunkt ein Chipmodul eingesetzt wird.

In Fig. 4 ist der Schnitt A-B der Fig. 3 schematisch wiedergegeben. Der besseren Übersicht wegen wurde auf die exakte Wiedergabe der Proportionen verzichtet. Üblicherweise sind die äußeren Abmaße derartiger Chipkarten etwa 85 mm x 54 mm, die Dicke beträgt 0,76 mm, die Membran 28 am Boden der Vertiefung 27 weist eine Wandstärke von etwa 100 m auf. Der äußere Durchmesser der Vertiefung 27 beträgt etwa 15 - 20 mm, die Form der Vertiefung kann sowohl hinsichtlich des äußeren Umrisses als auch in der Abstufung beliebig variieren. So sind z. B. rechteckige, quadratische oder auch ovale äußere Umrisse bekannt. Die Vertiefung selbst kann auch mehrere Abstufungen aufweisen oder im inneren Bereich linsenförmig ausgebildet sein.

Fig. 5 zeigt den Schnitt A-B des Kartenbereichs mit eingesetztem Chipmodul 44. Das Chipmodul besteht dabei aus einem Trägerfilm 29, auf dem metallische Kontaktflächen 30 vorgesehen sind, über welche bei der Benutzung der Chipkarte 26 mit dem in der Gießharzpille 31 angeordneten integrierten Schaltkreis, oder kurz Chip genannt (nicht dargestellt), kommuniziert werden kann. Das Chipmodul 44 ist mit einer Klebeschicht 32 versehen, mit deren Hilfe die Fixierung des Moduls inder Aussparung 27 erfolgt.

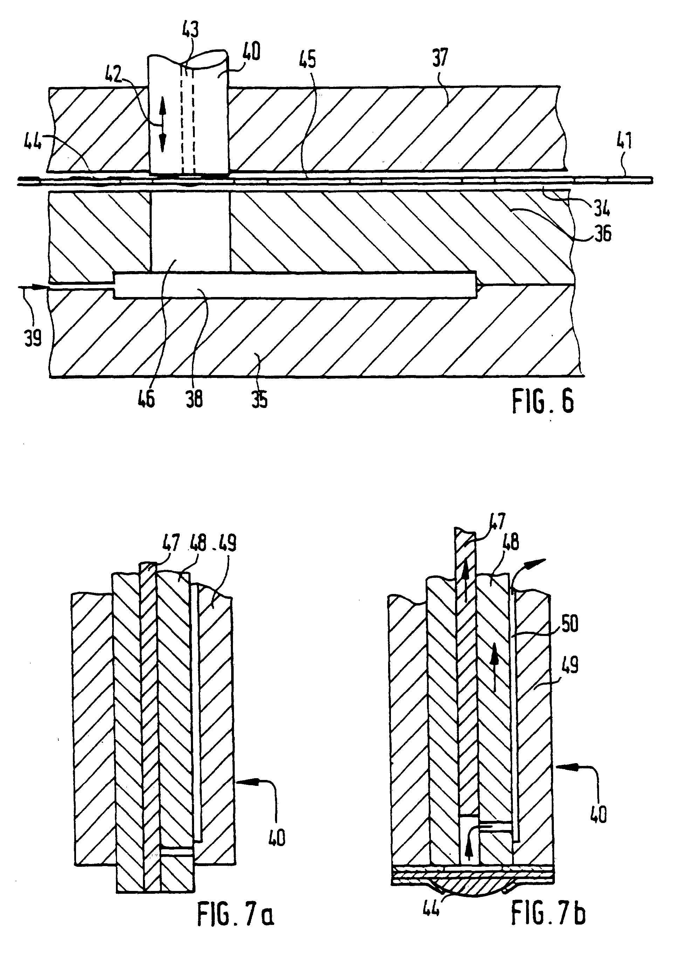

Fig. 6 zeigt eine Spritzgußform zur Herstellung von Chipkarten unter Nutzung des erfindungsgemäßen Verfahrens. Die Vorrichtung besteht im wesentlichen aus einer unteren Formhälfte 35 und einer oberen Formhälfte 36. Zwischen diesen beiden Formhälften ist der Formraum 38 vorgesehen, der die Form der späteren Chipkarte aufweist, allerdings ohne die in Fig. 4 dargestellte Vertiefung 27. Die beiden Formhälften 35 und 36 weisen einen Einspritzkanal 39 auf, über den das Kunststoffmaterial in die Form einfließt. Des weiteren ist eine Stempelführung 46 vorgesehen, über die der Stempel 40 in den Formraum 38 eingeführt werden kann.

Die in Fig. 6 dargestellte Vorrichtung weist weitere Vorrichtungselemente auf, mit deren Hilfe neben der Herstellung des einleitend beschriebenen Chipkartenrohlings auch die gleichzeitige Einbettung des Chipmoduls möglich ist.

Die obere Formhälfte 36 wird hierfür um eine weitere Führungsplatte 37 ergänzt, die ebenfalls eine Stempelführung 46 aufweist. Der Stempel 40 kann somit durch die Führungsplatte 37 und die obere Formhälfte 36 hindurch in den Formraum eingepreßt werden. Zwischen der oberen Formhälfte 36 und der Führungsplatte 37 ist ein Transportkanal 34 vorgesehen, der die Stempelführung 46 kreuzt und über den ein Folienband 41 an der Stirnseite des Stempels 40 vorbeitransportiert werden kann. Das Folienband 41 ist als "Endlosband" ausgeführt und enthält aneinandergereiht die Chipmodule 44.

In Abwandlung der anfangs beschriebenen einfachsten Ausführungsvariante weist der in Fig. 6 dargestellte Stempel 40 keine Abstufung, sondern eine plane Oberfläche auf. Außerdem sind ein oder mehrere Saugluftkanäle 43 vorgesehen, mit deren Hilfe das Folienband an die Stempelstirnseite angesaugt werden kann.

Die Herstellung der Karte erfolgt nun wie folgt; In einem ersten Schritt wird das Folienband 41 so vor der Stirnseite des Stempels 40 angeordnet, daß ein Chipkartenmodul 44 davor positioniert ist. Durch Absenken des Stempels 40 in Richtung Formraum 38 (Pfeil 42) wird das Chipmodul in die Stempelführung des Formteils 36 gedrückt und aus dem Folienband 41 ausgestanzt. Das ausgestanzte Chipmodul wird über die Saugkanäle 43 angesaugt und somit an der Stirnfläche des Stempels gehalten. Der Stempel 40 wird nun soweit in Richtung Formraum 38 abgesenkt, daß die Unterkante des Chipmoduls in etwa mit der Oberkante des Formraums 38 abschließt, d. h. das Chipmodul noch nicht in den Formraum hineinragt. In dieser Position wird das Kunststoffmaterial über den Einspritzkanal 39 eingespritzt. Nach ausreichender Füllung des Formraums wird der Stempel zusammen mit dem Chipmodul in die Kunststoffmasse eingepreßt und zwar soweit, daß die plane Stirnfläche des Stempels 40 bündig mit der späteren Kartenoberfläche abschließt.

Nach ausreichender Abkühlung der Kunststoffmasse wird die Form geöffnet, d. h. die Formhälften 35 und 36 auseinandergefahren und durch erneutes Aktivieren des Stempels 40 aus der Form ausgestoßen. Die Trennung der Karte von der im Einspritzkanal 39 befindlichen Kunststoffmasse erfolgt in bekannter Weise entweder durch Abreißen oder Abschneiden mit Hilfe von nicht dargestellten Schneidelementen.

Nach dem Schließen der beiden Formhälften 35 und 36 wird der Stempel 40 in die Ausgangspositon zurückgezogen und der mit der Ausstanzung 45 versehene Bereich des Filmbandes weiterbewegt, bis erneut ein Chipmodul 44 vor dem Stempel 40 positioniert ist.

Das in Fig. 6 dargestellte Kartenherstellverfahren ermöglicht somit die Herstellung von Spritzguß-Chipkarten bei gleichzeitiger Einbettung des Chipmoduls. Das Einpressen des Chipmoduls in die eingespritzte Kunststoffmasse ist, wie Versuche zeigten, relativ unproblematisch, solange die äußere Form des Chipmoduls einfach strukturiert und das Modul mechanisch belastbar ist. Bei aufwendiger strukturierten Modulen oder auch bei Verwendung von großen Chipbausteinen (wie z. B. Mikroprozessor-Chips) kann es ratsam sein, vor der Einbettung des Moduls den Hohlraum in der Karte zu schaffen. Dies erfolgt in einfacher Weise dadurch, daß der zur Fig. 6 beschriebene Verfahrensablauf modifiziert und ein Stempel 40 verwendet wird, mit dem diese zusätzlichen Funktionen zu bewerkstelligen sind.

Fig. 7a zeigt eine mögliche Ausführunsform eines derartigen mit zusätzlichen Funktionen ausgestatteten Stempels 40. Der Stempel 40 besteht aus drei ineinander gleitenden Stempelelementen 47, 48 und 49. Der Stempel 40 wird in der in Fig. 7a dargestellten Form zum Einpressen der Vertiefung 27 verwendet. Hierfür wird der Stempel durch die Folien-Ausstanzung 45 des Folienbandes 41 hindurch an den Formraum 38 herangeführt, das Kunststoffmaterial in den Formraum eingespritzt und, wie anfangs beschrieben, in die Formmasse eingepreßt.

Nachdem nun die gestufte Vertiefung 27 in den Kartenkörper eingeprägt wurde, wird der Stempel 40 in die Führungsplatte 37 zurückgezogen. Außerdem wird das Stempelelement 48 zurückbewegt, bis die Stirnfläche des Elements 48 mit der Stirnfläche des Elements 49 bündig abschließt. Des weiteren wird der Stift 47 in die in Fig. 7b gezeigte Stellung zurückgezogen und fixiert. In dieser Position ergibt sich ein im Zentrum der Stempelstirnfläche mündender Luftkanal, der durch eine Bohrung im Element 48 und eine im Element 49 vorgesehene Längsnut 50 das Ansaugen des Chipmoduls 44 gestattet.

Nachdem der Stempel 40 durch Zurückziehen der Elemente 47 und 48 in die in Fig. 7b dargestellte Anordnung gebracht und das Folienband 41 um eine Postion weiterbewegt wurde, wird der Stempel 40 wieder in Richtung Formraum gedruckt, wobei er, wie anfangs beschrieben, ein Chipmodul 44 aus dem Folienband 41 ausstanzt und dieses in der vorher geschaffenen gestuften Vertiefung plaziert. Das mit einer Kleberschicht 32 ausgestattete Chipmodul 44 wird nun mit dem Stempel 40 in die Ausnehmung 27 eingepreßt. Die Restwärme des Kunststoffmaterials aktiviert den Heißkleber und fixiert das Modul im Kartenkörper.

Nach ausreichender Abkühlung können die Formhälten 35 und 36 wieder geöffnet werden und der Kartenkörper aus der Form entnommen werden.

Besonders geeignet zum Einbau in Spritzgußkarten sind Chipmuodule mit Verankerungselementen, die das Modul zusätzlich oder alternativ zu einer Klebeschicht in dem Kartenkörper verankern.

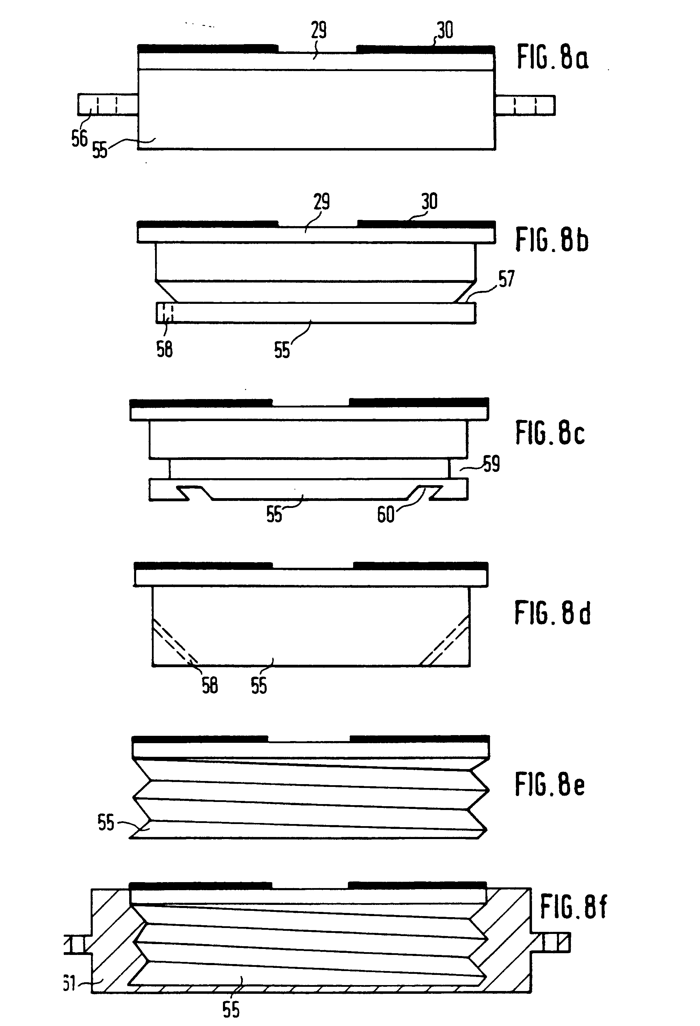

Ein solches Modul ist bereits aus der DE 31 31 216 C2 bekannt und in der Fig. 8a gezeigt. Der Einfachheit halber sind hier - genau wie in den folgenden Figuren - nur die zur Beschreibung des Sachverhalts notwendigen Komponenten eingezeichnet. Das Chipmodul besteht aus einem Trägerfilm 29, auf dem Kontaktflächen 30 liegen, die mit dem Chip leitend verbunden sind. Zum Schutz vor mechanischen Belastungen sind Chipmodul und leitende Verbindungen von einem Gußkörper 55 umgeben. Über den Rand des Gußkörpers 55 ragen Verankerungselemente 56 hinaus, die ausschließlich der Verankerung des Moduls im Kartenkörper dienen. Dazu kann das Verankerungselement 56 beispielsweise als durchlöcherter Ring ausgebildet sein, der im Kartenmaterial einzubetten ist.

Hierbei sind die Löcher vom Kartenmaterial durchdrungen, so daß eine Verankerung des Chipmoduls in der Karte gewährleistet ist.

Darüber hinaus sind bei in Spritzgußtechnik hergestellten Karten auch Chipmodule denkbar, bei denen die Verankerungselemente nicht über den Gußkörper hinausragen, sondern durch besondere Ausbildung, wie z. B. Aussparungen, Vertiefungen, Bohrungen etc., im Gußkörper selbst vorgesehen sind. Derartige Ausführungsformen sind in den Fig. 8b - 8e gezeigt

Bei der Herstellung der Spritzgußkarten können derartige Module entweder zunächst in den Formraum eingebracht und anschließend umspritzt oder nachträglich in die noch nicht erstarrte Kunststoffmasse eingepreßt werden. Besonders gut mit Kunststoffmaterial ausgefüllt werden dabei in Richtung des Materialflusses angeordnete Aussparungen, Kerben, Bohrungen, Profile etc.

Bei dem in Fig. 8b abgebildeten Modul ist in den Gußkörper 55 eine ringförmige Vertiefung eingelassen. Die keilförmige Ausbildung dieser Vertiefung begünstigt einerseits die Ausfüllung mit Kunststoffmaterial und gewährleistet andererseits eine optimale Verankerung des Moduls auch bei gebogener Chipkarte.

In Fig. 8c ist ein Chipmodul mit Aussparungen sowohl in der Mantelfläche als auch in der Stirnfläche des Gußkörpers dargestellt. Die Aussparung 59 in der Mantelfläche ist ringförmig ausgebildet und verhindert ein Entfernen des Chipmoduls aus dem Kartenkörper. Die angewinkelten Aussparungen 60 verankern das Modul zusätzlich im Kartenkörper, verhindern aber darüber hinaus auch ein Verdrehen des Moduls in der Karte.

Fig. 8d zeigt ein Chipmodul, dessen Gußkörper 55 von Kanälen 58 durchsetzt ist. Die Kanäle münden einerseits in der Bodenfläche des Moduls und andererseits in der Mantelfläche des Gußkörpers. Die Kanäle weisen beispielsweise eine Neigung von ca. 45° auf. Das in Fig. 8d dargestellte Chipmodul eignet sich besonders, wenn das Modul in die bereits eingespritzte Kunststoffmasse eingepreßt werden soll, da die Kanäle 58 auch dabei sehr gut von dem noch flüssigen Kunststoffmaterial durchströmt werden. Um ein späteres Brechen des in die Bohrungen eingeflossenen Kunststoffmaterials im Gebrauch der Karte zu verhindern, sind die Öffnungen in der Mantelfläche so angeordnet, daß sie bei eingepreßtem Chipmodul etwa in der Kartenmitte positioniert sind. Die hier bei gebogener Karte auftretenden Kräfte sind minimal, so daß eine Beschädigung der Verankerung durch Biegen der Karte nicht zu erwarten ist.

In Fig. 8e zeigt ein Chipmodul mit einem Gußkörper 55, dessen Mantelfläche als Gewinde ausgebildet ist. Die vergleichsweise komplexe Gewindestruktur bildet sich durch das Einpressen des Moduls in der noch nicht erstarrten Kunststoffmasse als exakte Negativform ab. Sind die den Gußkörper und den Kartenkörper bildenden Materialien so gewählt, daß sie sich nicht miteinander verbinden, kann das über das Gewinde mit dem Kartenkörper verankerte Modul später aus diesem herausgeschraubt werden. Somit ermöglicht das erfindungsgemäße Verfahren die Herstellung einer Chipkarte mit auswechselbarem Modul, ohne zusätzliche Verfahrensschritte vorsehen zu müssen.

Die Fig. 8f zeigt, das in Fig. 8e dargestellte Modul 55 in Verbindung mit einer Gewindehülse 61. Die Hülse weist Verankerungselemente 56 auf, über die die Hülse im Kartenkörper fixiert werden kann. Die Hülse 61 wird entweder mit oder ohne eingeschraubtem Modul 55 während des Spritzvorganges in den Kartenkörper eingebracht. Um eine Deformierung der Hülse zu verhindern, ist die Einbringung zusammen mit dem Chipmodul oder einem entsprechenden Moduldummy aber vorzuziehen.

Die in Fig. 8f dargestellte Hülse 61 ist mit einem Verankerungsrahmen ausgestattet, wie er in Fig. 8a gezeigt ist. Dieser ragt über den Rand der Hülse 61 hinaus und gewährleistet eine besonders gute Verankerung der Einheit Chipmodul/Hülse im Kartenkörper. In gleicher Weise sind aber auch andere Verankerungselemente verwendbar, wie z. B. die in den Fig. 8b - 8e gezeigten. Anstelle des Gewindes kann bei dieser Ausführungsform auch eine andere lösbare Verbindung, wie z. B. eine Art Bajonettverschluß, gewählt werden.

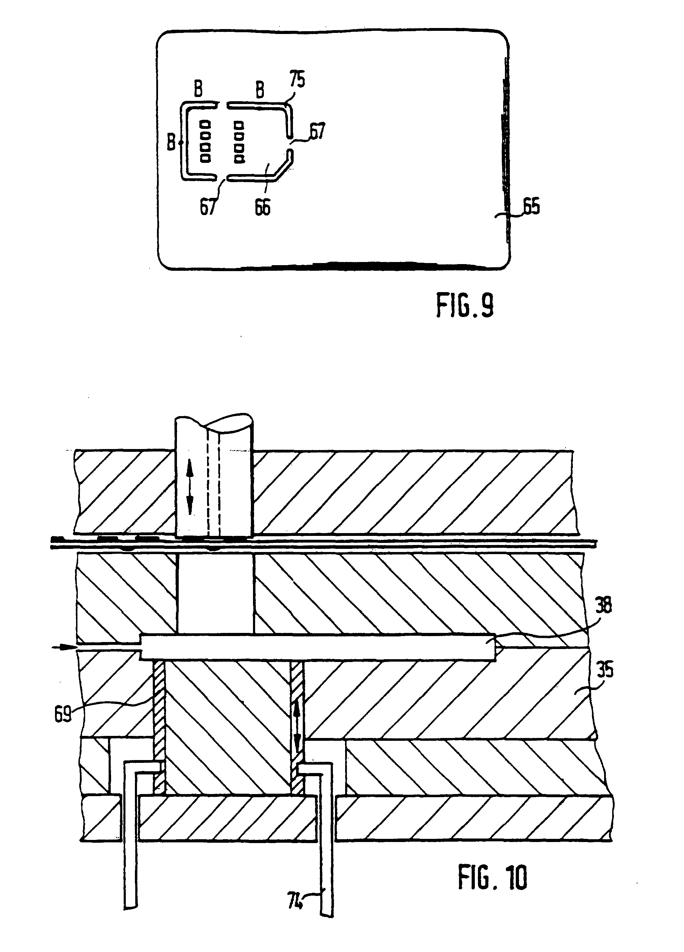

Fig. 9 zeigt eine Normkarte 65 mit integrierter Minichipkarte 66, wie sie beispielsweise aus der DE 40 07 221 A1 bekannt ist. Wie in der DE 40 07 221 A1 erläutert, werden derartige Minichipkarten 66 üblicherweise aus herkömmlichen Normkarten 65 ausgestanzt. Eine derartige Normkarte 65 mit integrierter Minichipkarte 66 kann aber auch mit Hilfe des erfindungsgemäßen Spritzgußverfahrens ohne nachträgliche Stanzvorgänge hergestellt werden. Dazu ist beispielsweise die in Fig. 6 abgebildete Spritzgußform zu modifizieren.

Fig. 10 zeigt eine derart angepaßte Spritzgußform. Bei ihr ist in der unteren Gußformhälfte 35 eine spaltförmige Öffnung vorgesehen, über die ein Stanzwerkzeug 69 in den Formraum 38 einbringbar ist. Das Stanzwerkzeug 69 weist die Form des in Fig. 9 in der Normkarte 65 dargestellten Stanzspaltes 75 auf.

Im Ruhezustand, d. h. in der in Fig. 10 gezeigten Anordnung, schließt die wirksame Stirnfläche des Stanzwerkzeuges 69 mit der Oberfläche des Formraumes der unteren Gußformhälfte 35 bündig ab. Das Stanzwerkzeug 69 ist dabei in der unteren Gußformhälfte 35 so eingepaßt, daß es zwar mit Hilfe der Greifer 74 in den Formraum eingeschoben werden kann, daß aber kein Spalt vorliegt, über den die in den Formraum eingespritzte Kunststoffmasse austreten kann. In der Stirnfläche des Stanzwerkzeugs 69 sind an den Stellen, an denen in der späteren Karte die Verbindungsstege 67 erzeugt werden sollen, "Kerben" vorgesehen, die in Form und Größe den späteren Verbindungsstegen entsprechen.

Die Herstellung der Normkarten mit integrierten Minichipkarten erfolgt in üblicher Weise, d. h. wie im Zusammenhang mit den Fig. 6 und 7 erläutert. Nach Abschluß dieses Vorgangs wird das Stanzwerkzeug 69 mit Hilfe der Greifer 74 in den Formraum eingepreßt, um die Umrißlinie 75 und die Stege 67 zu erzeugen. Nach Erstarren des Kartenmaterials wird das Stanzwerkzeug mit den Greifern 74 wieder aus dem Formraum 38 entfernt und nach Öffnen der Spritzgußform die Karte entnommen.

Der Vollständigkeit halber sei erwähnt, daß die in den Figuren dargestellten Ausführungsbeispiele keine abschließende Aufzählung der möglichen Ausführungsformen darstellen soll. Es ist für den Fachmann verständlich, daß die Kombination der verschiedenen Ausführungsdetails ebenso möglich ist, wie die Ergänzung oder Abänderung durch aus dem Stand der Technik bekannte Maßnahmen, ohne das erfindungsgemäße Grundprinzip zu verlassen.

## Patentansprüche

1. Verfahren zur Herstellung von Chipkarten, bestehend aus einem spritzgegossenen Kartenkörper (26) mit einer Aussparung (27), in der sich ein Chipmodul (44) befindet, **gekennzeichnet durch** folgende Verfahrensschritte:
- Positionieren eines mit Chipmodulen (44) versehenen Folienbandes (41) vor der Stirnfläche eines beweglichen Stempeis (40).
- Ansaugen des Folienbandes (41) **durch** Aktivieren einer Saugluftquelle in Richtung des Stempels.
- Absenken des Stempels (40) in Richtung eines Ausgangsformraums (38), dessen Konfiguration im wesentlichen dem Kartenkörper ohne Aussparung entspricht, und gleichzeitiges Ausstanzen eines Moduls (44) aus dem Folienband (41).
- Positionierung des Chipmoduls (44) im Bereich der Grenzfläche des Ausgangsformraumes (38).
- Einspritzen schmelzflüssigen Kunststoffmaterials in den Ausgangsformraum (38).
- Weiteres Absenken des Stempels (40), wodurch das Chipmodul (44) in die Oberfläche des Formstücks eingepreßt wird, nachdem der Formraum (38) im Bereich des Stempels (40) weitgehend mit Kunststoffmaterial gefüllt ist.
- Vollständiges Ausspritzen des Formraums (38), soweit noch Hohlräume im Formraum (38) mit Kunstsoffmaterial auszufüllen sind.
- Abkühlung des Formteils bis zur Erstarrung des Kunststoffmaterials.
- Öffnen der Spritzgußform und Entnahme des Formteils.

2. Verfahren zur Herstellung von Chipkarten, bestehend aus einem spritzgegossenen Kartenkörper (26) mit Aussparung (27), in der sich ein Chipmodul (44) befindet, **gekennzeichnet durch** folgende Verfahrensschritte:
- Absenken eines Stempels (40) mit an die zu erstellende Aussparung angepaßte Stirnfläche bis in den Bereich der Formraumoberfläche eines Ausgangsformraums (38), dessen Konfiguration im wesentlichen dem Kartenkörper ohne Aussparung entspricht.
- Einspritzen des Kunststoffmaterials in den Ausgangsformraum (38).
- Weiteres Absenken des Stempels (40) in die Kunststoffmasse des Formraums (38) zur Formung der im Formteil zu erzeugenden Aussparung.
- Weiteres Einspritzen des Kunststoffmaterials, bis alle Hohlräume im Formraum (38) ausgefüllt sind.
- Abkühlen des Formstücks bis zum Erstarren der Kunststoffmasse.
- Zurückziehen des beweglichen Stempels (40) in eine Warteposition, in der ein mit Chipmodulen (44) bestücktes Folienband (41) vor der Stirnfläche des Stempels (40) positionierbar ist.
- Verändern der Stempelstirnfläche in eine Form, die zum Ausstanzen, Fixieren und Einsetzen eines Chipmoduls (44) in die Vertiefung des Formstücks geeignet ist.
- Positionieren des Folienbandes (41) vor der Stempelstirnfläche.
- Ansaugen des Chipmoduls (44).
- Erneutes Absenken des Stempels (40) bei gleichzeitigem Ausstanzen des Chipmoduls (44), bis das Chipmodul (44) in die Aussparung des Formstücks eingesetzt ist.
- Einpressen des Chipmoduls (44) in die Aussparung (27) des Kartenkörpers (26).
- Öffnen der Form und Entnehmen der Chipkarte.

3. Verfahren nach einem der Ansprüche 1 - 2, **dadurch gekennzeichnet, daß** der bewegliche Stempel (40) erst nach im wesentlichen vollständiger Füllung des Ausgangsformraumes (38) in diesen abgesenkt wird.

4. Verfahren nach Anspruch 3, **dadurch gekennzeichnet, daß** parallel zur Absenkung des beweglichen Stempels (40) bzw. zur Verkleinerung bestimmter Wandbereiche in anderen Bereichen des Formraumes (38) Wandabstände vergrößert werden, wobei die Bereiche mit den vergrößerten Wandabständen das aus den erstgenannten Bereichen verdrängte Kunststoffmaterial aufnehmen.

5. Verfahren nach Anspruch 3, **dadurch gekennzeichnet, daß** das Material in das Angießsystem (39) verdrängt wird.

6. Verfahren nach einem der Ansprüche 1 - 2, **dadurch gekennzeichnet, daß** die durch die Absenkung des beweglichen Stempels (40) in den Formraum (38) bewirkte Materialverdrängung bei der Materialzufuhr bereits mitberücksichtigt wird.

7. Verfahren nach einem der Ansprüche 1 - 2, **dadurch gekennzeichnet, daß** das Chipmodul (44) eine Heißkleberbeschichtung (32) aufweist, die nach dem Einbringen in die Aussparung (27) bzw. nach dem Einpressen in die Kunststoffmasse des Kartenkörpers (26) mittels der Restwärme des Kartenkörpers (26) aktiviert wird.

8. Verfahren zum Herstellen von einer in einer Normkarte (65) integrierten Minichipkarte (66), die über Stege (67) mit dem umgebenen Kartenkörper der Normkarte (65) verbunden ist, nach einem der Ansprüche 1 - 2, **dadurch gekennzeichnet, daß** die Umrißlinie der Minichipkarte (66) durch Einpressen eines Stanzwerkzeuges (69) in das im Formraum (38) der Spritzgußvorrichtung angeordnete Kunststoffmaterial erzeugt wird.

9. Spritzgußvorrichtung zur Durchführung des Verfahrens nach Anspruch 1, mit einer Form, die wenigstens einen Formraum einschließt und die relativ zueinander bewegliche Formteile aufweist und wenigstens einen zwischen einer ersten und einer zweiten Stellung in und aus dem Formbereich bewegbaren Stempel aufweist, dadurch gekennzeichnet, daß
- der Formraum (38) weitestgehend einer Chipkarte ohne Aussparung entspricht,
- eines der Formteile (35,36) eine Führung (34) für ein Folienband (41) mit Chipmodulen (44) aufweist,
- die Stirnfläche des beweglichen Stempels (40) weitestgehend plan ausgeführt ist.

10. Spritzgußvorrichtung zur Durchführung des Verfahrens nach Anspruch 2, mit einer Form, die wenigstens einen Formraum einschließt und die relative zueinander bewegliche Formteile aufweist und wenigstens einen zwischen einer ersten und einer zweiten Stellung in und aus dem Formbereich bewegbaren Stempel aufweist, dadurch gekennzeichnet. daß
- der Formraum (38) weitestgehend einer Chipkarte ohne Aussparung entspricht,
- eines der Formteile (35,36) eine Führung (34) für ein Folienband (41) mit Chipmodulen (44) aufweist,
- die Stirnfläche des beweglichen Stempels (40) veränderbar ist und entweder der im Kartenkörper (22) zu erzeugenden Aussparung (27) entspricht oder weitestgehend plan ausgeführt ist.

## Claims

1. A method for producing chip cards comprising an injection-molded card body (26) with a recess (27) containing a chip module (44), **characterized by** the following method steps:
positioning a foil strip (41) provided with chip modules (44) before the face of a movable die (40),
sucking the foil strip (41) against the die by activating a suction air source,
lowering the die (40) toward an initial mold space (38) whose configuration corresponds substantially to the card body without a recess, and simultaneously stamping a module (44) out of the foil strip (41),
positioning the chip module (44) in the area of the boundary surface of the initial mold space (38),
injecting molten plastic material into the initial mold space (38),
further lowering the die (40) so that the chip module (44) is pressed into the surface of the molding after the mold space (38) in the area of the die (40) is largely filled with plastic material,
completely filling the mold space (38) in so far as any cavities in the mold space (38) are left to be filled with plastic material,
cooling the molding until the plastic material has solidified,
opening the injection mold and removing the molding.

2. A method for producing chip cards comprising an injection-molded card body (26) with a recess (27) containing a chip module (44), **characterized by** the following method steps:
lowering a die (40) with a face adapted to the recess to be produced, into the area of the surface of an initial mold space (38) whose configuration corresponds substantially to the card body without a recess,
injecting the plastic material into the initial mold space (38),
further lowering the die (40) into the plastic compound of the mold space (38) to form the recess to be produced in the molding,
further injecting the plastic material until all cavities in the mold space (38) are filled,
cooling the molding until the plastic compound has solidified,
withdrawing the movable die (40) into a waiting position in which a foil strip (41) equipped with chip modules (44) is positioned before the face of the die (40),
changing the face of the die into a form suitable for stamping out, fixing, and inserting a chip module (44) in the depression in the molding,
positioning the foil strip (41) before the face of the die,
sucking the chip module (44),
lowering the die (40) again while stamping out the chip module (44) until the chip module (44) is inserted into the recess in the molding,
pressing the chip module (44) into the recess (27) in the card body (26),
opening the mold and removing the chip card.

3. The method of either of claims 1 to 2, **characterized in that** the movable die (40) is lowered into the initial mold space (38) only after the latter has been filled virtually completely.

4. The method of claim 3, **characterized in that** wall distances are increased in certain areas of the mold space (38) parallel to the lowering of the movable die (40) or the reduction of other wall areas, the areas with the increased wall distances taking up the plastic material displaced out of the other areas.

5. The method of claim 3, **characterized in that** the material is displaced into the gate system (39).

6. The method of either of claims 1 to 2, **characterized in that** the displacement of material caused by the lowering of the movable die (40) into the mold space (38) is already taken into account in the supply of material.

7. The method of either of claims 1 to 2, **characterized in that** the chip module (44) has a hot-melt adhesive coating (32) that is activated by the residual heat of the card body (26) after it has been incorporated in the recess (27) or pressed into the plastic compound of the card body (26).

8. A method for producing a mini chip card (66) integrated in a standard card (65) that is connected via bars (67) with the surrounding card body of the standard card (65), according to either of claims 1 to 2, **characterized in that** the contour of the mini chip card (66) is produced by pressing a stamping die (69) into the plastic material disposed in the mold space (38) of the injection molding means.

9. An injection molding means for carrying out the method of claim 1 having a mold enclosing at least one mold space and having mutually movable mold parts and at least one die movable between first and second positions into and out of the mold area, **characterized in that**
the mold space (38) corresponds virtually to a chip card without a recess,
one of the mold parts (35, 36) has a guide means (34) for a foil strip (41) with chip modules (44),
the face of the movable die (40) is virtually plan.

10. An injection molding means for carrying out the method of claim 2 having a mold enclosing at least one mold space and having mutually movable mold parts and at least one die movable between first and second positions into and out of the mold area, **characterized in that**
the mold space (38) corresponds virtually to a chip card without a recess,
one of the mold parts (35, 36) has a guide means (34) for a foil strip (41) with chip modules (44),
the face of the movable die (40) is variable and either corresponds to the recess (27) to be produced in the card body (22) or is virtually plan.

## Revendications

1. Procédé de fabrication de cartes à puce, formées par un corps de carte (26) moulé par injection, avec un évidement (27), dans lequel se trouve un module de puce (44), **caractérisé par** les étapes de procédé suivantes :
- positionnement d'une bande de feuille (41), munie de modules de puce (44), devant la surface frontale d'un poinçon (40) mobile,
- aspiration de la bande de feuille (41) par actionnement d'une source d'air d'aspiration dans la direction du poinçon (40),
- abaissement du poinçon (40) en direction d'un espace de moulage initial (38), dont la configuration correspond pour l'essentiel au corps de carte sans évidement et, simultanément, découpe d'un module (44) dans la bande de feuille (41),
- positionnement du module de puce (44) au niveau de la surface limite de l'espace de moulage initial (38),
- injection d'une matière plastique en fusion liquide dans l'espace de moulage initial (38),
- mouvement supplémentaire d'abaissement du poinçon (40), moyennant quoi le module de puce (44) est enfoncé dans la surface de la pièce moulée, après que l'espace de moulage (38) a été largement rempli dans la zone du poinçon (40) par 1a matière plastique,
- remplissage complet par injection de l'espace de moulage (38), dans la mesure où il reste encore dans l'espace de moulage (38) des vides à combler avec la matière plastique,
- refroidissement de la pièce moulée jusqu'à solidification de la matière plastique,
- ouverture du moule d'injection et démoulage de la pièce moulée.

2. Procédé de fabrication de cartes à puce, formées par un corps de carte (26), moulé par injection, avec un évidement (27), dans lequel se trouve le module de puce (44), **caractérisé par** les étapes de procédé suivantes :
- abaissement d'un poinçon (40), avec une surface frontale adaptée à l'évidement à réaliser, jusque dans la zone de la surface de moulage d'un espace de moulage initial (38) dont la configuration correspond pour l'essentiel au corps de carte sans évidement,
- injection de la matière plastique dans l'espace de moulage initial (38),
- mouvement supplémentaire d'abaissement du poinçon (40) dans la masse formée par la matière plastique dans l'espace de moulage (38), en vue de former l'évidement à réaliser dans la pièce moulée,
- poursuite de l'injection de matière plastique jusqu'à ce que tous les vides dans l'espace de moulage (38) soient comblés,
- refroidissement de la pièce moulée jusqu'à solidification de la masse de matière plastique,
- mouvement de retour du poinçon (40) dans une position d'attente, dans laquelle une bande de feuille (41) munie de modules de puce (44) peut être positionnée devant la surface frontale du poinçon (40),
- modification de la surface frontale du poinçon dans une forme qui est adaptée à la découpe, à la fixation et à l'encartage d'un module de puce (44) dans le logement de la pièce moulée,
- positionnement de la bande de feuille (41) devant la surface frontale du poinçon (40),
- aspiration du module de puce (44),
- mouvement supplémentaire d'abaissement du poinçon (40) et, simultanément, découpe du module de puce (44), jusqu'à ce que le module de puce (44) soit inséré dans l'évidement de la pièce moulée ;
- enfoncement du module de puce (44) dans l'évidement (27) du corps de carte (26),
- ouverture du moule et démoulage de la carte à puce.

3. Procédé selon l'une quelconque des revendications 1 et 2, **caractérisé en ce que** le poinçon (40) mobile est abaissé dans l'espace de moulage initial (38) uniquement après que celui-ci a été sensiblement rempli intégralement.

4. Procédé selon la revendication 3, **caractérisé en ce que**, parallèlement à l'abaissement du poinçon (40) mobile ou à la diminution de certaines zones de paroi dans d'autres zones de l'espace de moulage (38), des distances entre parois sont agrandies, moyennant quoi les zones avec les distances entre parois agrandies sont destinées à recevoir la matière plastique refoulée hors des premières zones mentionnées.

5. Procédé selon la revendication 3, **caractérisé en ce que** la matière est refoulée dans le système du culot d'injection (39).

6. Procédé selon l'une quelconque des revendications 1 et 2, **caractérisé en ce que** le refoulement de matière provoqué par l'abaissement du poinçon (40) mobile dans l'espace de moulage (38) est déjà pris en compte au moment de l'admission de la matière.

7. Procédé selon l'une quelconque des revendications 1 et 2, **caractérisé en ce que** le module de puce (44) est revêtu d'une couche thermocollante qui, après l'encartage dans l'évidement (27) ou après l'enfoncement dans la masse de matière plastique du corps de carte (26), est activée par l'intermédiaire de la chaleur résiduelle du corps de carte (26).

8. Procédé de fabrication d'une minicarte à puce (66), intégrée dans une carte standard (65), qui est assemblée par des languettes (67) avec le corps de carte environnant de la carte standard (65), selon l'une quelconque des revendications 1 et 2, **caractérisé en ce que** les contours de la minicarte à puce (66) sont obtenus par l'enfoncement d'un outil d'estampage (69) dans la matière plastique contenue dans l'espace de moulage (38) du dispositif de moulage par injection.

9. Dispositif de moulage par injection destiné à la mise en oeuvre du procédé selon la revendication 1, qui comprend au moins un espace de moulage et qui comporte des parties de moule mobiles l'une par rapport à l'autre et comporte au moins un poinçon mobile entre une première position et une deuxième position à l'intérieur et en dehors de la zone de moulage, **caractérisé en ce que**
- l'espace de moulage (38) correspond pour l'essentiel à une carte à puce sans évidement,
- l'une des parties du moule (35, 36) comporte un guidage (34) pour une bande de feuille (41) munie de modules de puce (44),
- la surface frontale du poinçon (40) mobile est essentiellement plane.

10. Dispositif de moulage par injection destiné à la mise en oeuvre du procédé selon la revendication 2, qui comprend au moins un espace de moulage et qui comporte des parties de moule mobiles l'une par rapport à l'autre et comporte au moins un poinçon mobile entre une première position et une deuxième position à l'intérieur et en dehors de la zone de moulage, **caractérisé en ce que**
- l'espace de moulage (38) correspond pour l'essentiel à une carte à puce sans évidement,
- l'une des parties du moule (35, 36) comporte un guidage (34) pour une bande de feuille (41) munie de modules de puce (44),
- la surface frontale du poinçon (40) mobile est variable et correspond soit à l'évidement (27) à réaliser dans le corps de carte (22), soit présente une configuration essentiellement plane.
